Europäisches Patentamt

European Patent Office

Office européen des brevets

(19)

(11) Numéro de publication: **0 223 663**
**A1**

(12) **DEMANDE DE BREVET EUROPEEN**

(21) Numéro de dépôt: **86402307.2**

(22) Date de dépôt: **15.10.86**

(51) Int. Cl.⁴: **G 05 D 23/19**
**H 02 J 13/00**

(30) Priorité: **15.10.85 FR 8515279**

(43) Date de publication de la demande:
**27.05.87 Bulletin 87/22**

(84) Etats contractants désignés:
**AT BE CH DE ES GB GR IT LI NL SE**

(71) Demandeur: **ELECTRICITE DE FRANCE Service National**
**2, rue Louis Murat**
**F-75008 Paris (FR)**

**AIRELEC INDUSTRIES**
**32, rue du Landy**
**F-93308 Aubervilliers Cédex (FR)**

(72) Inventeur: **Pichot, Jacky**
**4 rue Haute**
**F-77130 La Grande Paroisse (FR)**

**Halleur, Lionel**
**15, chemin de la Tour lieu dit "La Thurelle"**
**Vernou La Celle F-77670 Saint Mammes (FR)**

**Deglise, Sylvain**
**39 rue des Rieux**
**F-94120 Fontenay sous Bois (FR)**

(74) Mandataire: **Moncheny, Michel et al**
**c/o Cabinet Lavoix 2 Place d'Estienne d'Orves**
**F-75441 Paris Cedex 09 (FR)**

(54) Système de commande sélective d'une série de terminaux périphériques par un dispositif de commande central.

(57) La présente invention concerne un système de commande sélective d'une série de terminaux périphériques (4, 4', 4", 4''') à chacun desquels est associé un appareillage local à commander, notamment des dispositifs de chauffage, de ventilation, d'éclairage ou analogue, par un dispositif de commande central (2) comportant des moyens d'émission de blocs de données de commande sélective desdits terminaux périphériques, chaque terminal périphérique comportant des moyens de réception desdits blocs de données de commande, caractérisé en ce que chaque terminal périphérique comprend en outre des moyens de détection d'état, des moyens de traitement de données, des moyens d'émission de blocs de données d'état en réponse à la réception d'un bloc de données de commande et des moyens de commande de l'appareillage associé en fonction du bloc de données de commande reçu et des données d'état et en ce que le dispositif de commande central comporte des moyens de réception des blocs de données d'état émis par les terminaux périphériques.

FIG.1

EP 0 223 663 A1

## Description

Système de commande sélective d'une série de terminaux périphériques par un dispositif de commande central.

La présente invention concerne un système de commande sélective d'une série de terminaux périphériques par un dispositif de commande central et s'applique particulièrement à la commande sélective de dispositifs locaux de chauffage, de ventilation, d'éclairage ou analogue.

Les systèmes connus, notamment dans l'application au chauffage électrique direct par convecteur, mettent en jeu une liaison unidirectionnelle du dispositif de commande central vers les terminaux périphériques auxquels sont associés les convecteurs à commander. Afin de rendre ces systèmes plus efficaces et économiques, divers moyens sont utilisés : blocage d'un point de consigne au niveau de chaque terminal, limitation d'énergie en tête de l'installation électrique (en fonction de tarifs ou d'horaires) ou pilotage à distance du point de consigne en fonction de l'occupation des locaux. Toutes ces solutions présentent en raison des contraintes imposées au terminal, un inconvénient majeur consistant en la diminution de la souplesse du convecteur destiné à permettre un chauffage localisé utilisant une énergie optimale.

L'invention se propose de réaliser un système de commande sélective d'une série de terminaux périphériques par un dispositif de commande central, qui permette de conserver la souplesse de l'appareillage associé à chaque terminal tout en autorisant une gestion optimale de la commande sélective.

Elle a donc pour objet un système de commande sélective d'une série de terminaux périphériques à chacun desquels est associé à un appareillage local unique à commander, notamment des dispositifs de chauffage, de ventilation, d'éclairage ou analogue, let terminal étant incorporé audit appareillage, par un dispositif de commande central comportant des moyens d'émission de blocs de données de commande sélective desdits terminaux périphériques, chaque terminal périphérique étant réalisé à base d'un unique contrôleur masque identique pour tous les appareils mais configurable par ses entrées et/ou son mode de câblage et comportant des moyens de réception desdits blocs de données de commande, caractérisé en ce que chaque terminal périphérique comprend en outre des moyens de détection d'état de l'appareillage et/ou de son environnement, des moyens de traitement de données d'état et de commande, des moyens d'émission de blocs de données d'état on réponse à la réception d'un bloc de données de commande et des moyens d'asservissement et de commande de l'appareillage associé en fonction du bloc de données de commande reçu, le fonctionnement de l'appareillage pouvant être assuré de manière autonome par le terminal périphérique, et en ce que le dispositif de commande central comporte des moyens de réception des blocs de données d'état émis par les terminaux périphériques, le tout étant caractérisé par une architecture de transmission sur un seul niveau.

L'invention sera mieux comprise à la lumière de la description qui va suivre, donnée uniquement à titre d'exemple et faite en se référant aux dessins annexés, sur lesquels :

- la Fig.1 représente un schéma simplifié d'un système de commande sélective selon l'invention ;
- la Fig.2 est un schéma plus détaillé du système de la Fig.1 ;
- la Fig.3 est un schéma du circuit d'émission d'un terminal, utilisé dans un mode de réalisation particulier de l'invention ;
- la Fig.4 représente un chronogramme de fonctionnement du circuit d'émission de la Fig.3 ;
- la Fig.5 est un circuit de réception corespondant au circuit d'émission de la Fig.3 ;
- la Fig.6 représente une courbe de fonctionnement du circuit de réception de la Fig.5 ;
- la Fig.7 représente la structure d'un terminal périphérique comportant les circuits d'émission et de réception des Fig.3 et 5 ;
- la Fig.8 est un schéma détaillé du terminal périphérique de la Fig.7 ;
- la Fig.9 est un exemple d'organigramme de fonctionnement d'un terminal dans le système selon l'invention, et
- la Fig.10 est une courbe représentant un mode d'interprétation d'un élément binaire composant un mot transmis dans le mode de réalisation particulier représenté aux Fig. 3 à 9.

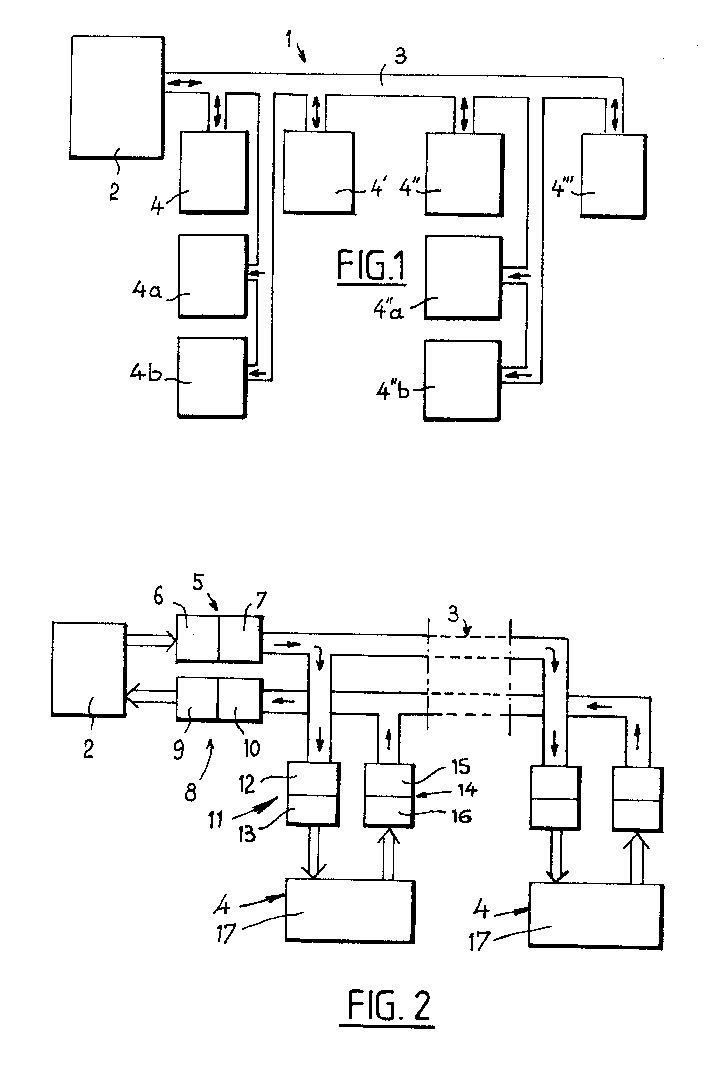

La Fig.1 représente un schéma simplifié d'un système de commande sélective 1 comportant un dispositif de commande central 2 relié par un canal de transmission à une série de terminaux périphériques 4, 4', 4", 4''' à chacun desquels est associé un appareillage unique à commander (non représenté). Le dispositif de commande central maitrisant la procédure de dialogue, ce système doit permettre une transmission bidirectionnelle séquentielle de données, d'une part des données de commande du dispositif central vers un des terminaux périphériques et d'autre part des données d'état à partir de chaque terminal périphérique vers le dispositif de commande central. Les données d'état comprennent l'adresse de provenance et des informations d'état, et, après réception et interprétation de ces données par le dispositif de commande central, le système permet une modification éventuelle des données de commande suivantes à transmettre vers ledit terminal, ces données de commande comprenant l'adresse de destination et des instructions de commande. La sélectivité de la commande est donc obtenue par le fait que chaque terminal est repéré par une adresse qui lui est propre. En plus, des terminaux périphériques "émetteur-récepteur" ou maîtres, on a également représenté des terminaux périphériques "recepteur" ou eclaves associés chacun à un terminal "maîtres" et possédant la même adresse. Dans l'exemple représenté, les terminaux 4a et 4b sont associés au terminal 4 et les terminaux 4"a et 4"b sont associés au terminal 4". Le rôle de ces terminaux esclave sera énoncé plus en détail par la suite.

L'action élémentaire de dialogue peut être décrite de la manière suivante : le dispositif de commande central 2 envoie un bloc de données de commande par l'intermédiaire du canal de transmission 3 vers un des terminaux destinataires 4, 4', 4", 4"', ce qui provoque au niveau de celui-ci, l'envoi automatique en retour d'un bloc de données d'état à destination du dispositif de commande central, les données d'état étant obtenues à partir du terminal et notamment à partir de capteurs. Les informations transmises sont mémorisées par les terminaux et le dispositif de commande central jusqu'à ce qu'une nouvelle actualisation ait lieu. Les actions élémentaires sont effectuées séquentiellement par le dispositif de commande central vers les terminaux périphériques dont il est nécessaire de modifier les commandes pour leurs appareillages associés et/ou des terminaux périphériques dont il est nécessaire de prendre en compte l'état qui reflète la situation physique des appareillages associés à commander et de leur environnement. Cette exploration séquentielle peut être aléatoire ou bien systématique et établie par exemple dans l'ordre des adresses croissantes des terminaux périphériques. Dans ce cas le dialogue s'effectue de la manière suivante : envoi par le dispositif de commande central d'un bloc à l'adresse d'un terminal périphérique n, renvoi d'un bloc par le terminal périphérique n au dispositif de commande, envoi d'un bloc de commande à l'adresse du terminal périphérique n + 1, etc.

Les informations contenues dans un bloc sont regroupées sous forme de mots correspondant aux instructions ou aux informations d'état et à l'adresse de destination ou de provenance. Afin d'améliorer la protection vis-à-vis des parasites pouvant exister sur le canal de transmission, selon une deuxième variante, une action élémentaire peut comporter la répétition de chaque bloc deux fois ou plus, les informations contenues dans chaque bloc n'étant prises en compte que si des blocs successifs en nombre suffisant sont identiques. Dans ce cas, le dispositif de commande central est avisé du fait que les informations de commande n'ont pas été prises en compte par le terminal destinataire en ne recevant pas de bloc en retour en provenance de ce terminal, et peut décider alors de renouveler l'action élémentaire à destination de ce terminal.

Afin de permettre une meilleure transmission même en milieu fortement et constamment parasité, selon une troisième variante l'action élémentaire peut comporter la répétition d'un bloc, la prise en compte de ce bloc n'étant alors effectuée que si les adresses contenues dans ces deux blocs sont identiques. Ces blocs sont ensuite analysés mot par mot et seule l'information contenue dans des mots identiques est mémorisée. Il est également possible de prévoir une action élémentaire qui comporte la répétition de plus de deux blocs, la prise en compte ne se faisant que pour les informations contenues dans des mots identiques d'une proportion minimale de blocs répétés.

La Fig. 2 représente un mode particulier de réalisation d'un système de commande sélective selon l'invention permettant d'améliorer le débit des informations et la protection contre les erreurs de transmission. Ce système de commande sélective comporte un dispositif de commande central 2 relié à un circuit 5 comportant une partie de circuit de codage 6 et une partie de circuit de modulation 7 et un circuit 8 comportant une partie de circuit de décodage 9 et une partie de circuit de démodulation 10. Les circuits 5 et 8 sont reliés par le canal de transmission au niveau de chaque terminal périphérique respectivement à un circuit 11 comportant une partie de circuit de démodulation 12 et une partie de circuit de décodage 13, et à un circuit 14 comportant une partie de circuit de modulation 15 et une partie de circuit de codage 16. Les circuits 11 et 14 sont reliés à un circuit de gestion 17 interne à chaque terminal 4 et dans lequel sont rassemblées les fonctions de gestion. Chaque circuit de gestion 17 présente avantageusement une structure programmée et réalise à la fois la gestion de la procédure de dialogue bidirectionnel et la gestion spécifique à chaque terminal, c'est-à-dire notamment les entrées et les sorties analogiques ou logiques, les asservissements en provenance et à destination de l'appareillage à commander (non représenté). Une particularité du système est d'avoir une architecture de transmission sur un seul niveau comme on peut le constater sur les Fig.1 et 2.

Dans le cas où chaque circuit de gestion comporte une structure programmée unique, le niveau de gestion de procédure de dialogue est "maître" et la gestion spécifique au niveau d'un terminal s'effectue durant les actions élémentaires destinées à d'autres terminaux périphériques ou entre celles-ci.

Le dispositif de commande central 2 peut être considéré comme un terminal périphérique particulier dont le circuit de gestion est différent, principalement en ce qui concerne sa gestion spécifique, et il est avantageusement équipé d'un processeur destiné exclusivement à la gestion de la procédure de dialogue de manière à permettre les traitements simultanés, et possède un ou plusieurs autres processeurs pour la gestion spécifique du système.

Comme mentionné ci-dessus, grâce à la structure particulière de l'action élémentaire décrite précédemment, il est possible d'établir une configuration telle que plusieurs terminaux périphériques soient repérés par une même adresse, l'un d'eux étant appelé "terminal maître" et étant conforme aux terminaux décrits précédemment. Les autres terminaux périphériques portant la même adresse sont appelés terminaux "esclaves" et ne possèdent pas de circuit d'émission de données d'état vers le dispositif de commande central (ou dans lesquels les sorties des moyens d'émissions sont inhibées), mais reçoivent les données de commande issues du dispositif de commande central et comportant leur adresse et peuvent également recevoir tout ou partie des informations d'état transmises par le terminal périphérique "maître" de même adresse à destination du dispositif de commande central. Ainsi une transmission d'information unidirectionnelle entre terminaux périphériques peut être établie.

Dans l'application particulière de l'invention à la gestion de chauffage direct par convecteur on utilise avantageusement une ligne bifilaire non polarisée constituant un canal de transmission fiable et simple à mettre en oeuvre. Tous les mots d'un bloc de données sont transmis sous forme numérique par une série d'éléments binaires, des groupes d'éléments binaires de séparation pouvant être intercalés entre chaque mot et entre chaque bloc. Il va de soi que l'on peut utiliser tout autre canal de transmission tel que le secteur, la voie hertzienne ou analogue.

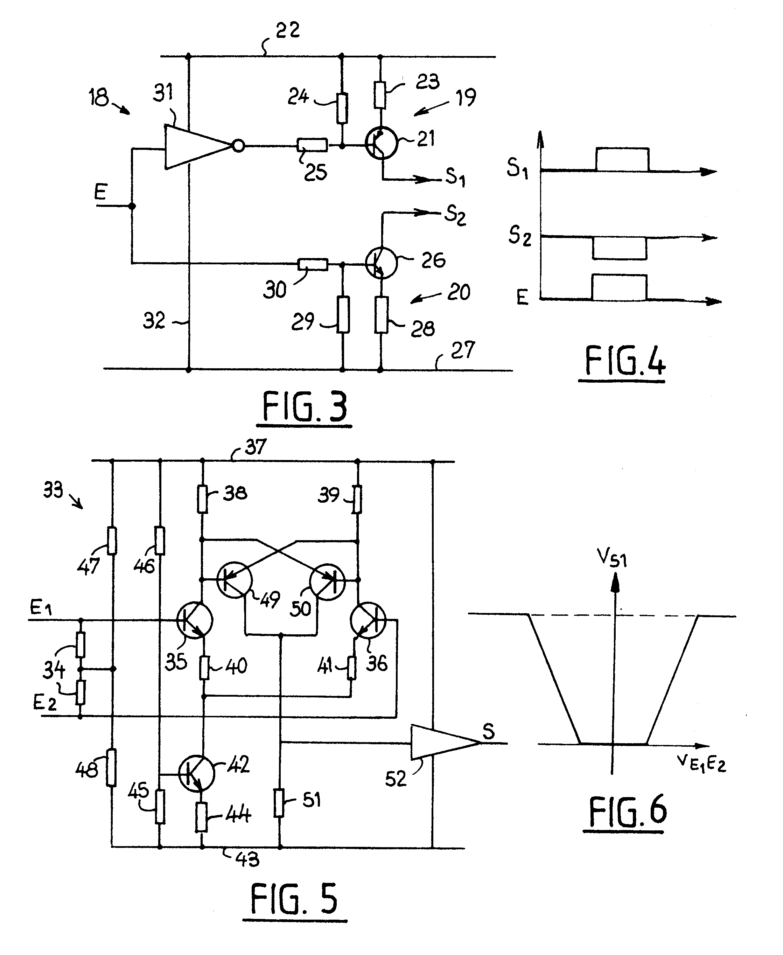

Sur la Fig.3, on a représenté un circuit d'émission 18 de blocs de données de commande ou d'état composé de deux sources de courant symétriques 19 et 20 commandées en synchronisme. La source de courant 19 comprend un transistor PNP 21 dont l'émetteur est relié à la ligne 22 à travers une résistance 23 et dont la base est reliée à travers une résistance 24 à cette même ligne 22. La base du transistor 21 est également reliée à une borne d'une résistance 25. La source de courant 20 est constituée par un transistor NPN 26 dont l'émetteur est relié à la ligne 27 à travers une résistance 28 et dont la base est reliée d'une part à la ligne 27 à travers une résistance 29 et à une résistance 30. L'autre borne de la résistance 30 est reliée à l'entrée d'un inverseur 31 dont la sortie est reliée à l'autre borne de la résistance 25. Les lignes d'alimentation positive 22 et d'alimentation négative 27 sont reliées aux bornes d'alimentation de l'inverseur logique 31. Les collecteurs des transistors 21 et 26 constituent respectivement les sorties des sources de courant positive 19 et négative 20, et la borne d'entrée de l'inverseur logique 31 est reliée à la borne d'entrée E du circuit d'émission.

Sur la Fig.4, on a représenté des courbes illustrant le fonctionnement de ce circuit d'émission et correspondant respectivement aux sorties S1, S2 et à l'entrée de commande E. Comme on peut le voir, les sources de courant ne fonctionnent que lorsqu'un "1" logique est appliqué à l'entrée E et ne produisent aucun courant de sortie lorsque cette entrée E est à la logique zéro, ce qui constitue l'état d'inhibition du circuit d'émission.

Sur la Fig.5, on a représenté un circuit de réception de blocs de données de commande ou d'état correspondant au circuit d'émission de la Fig.3. Ce circuit de réception 33 comporte deux bornes d'entrée E1 et E2 reliées entre elles par deux résistances 34 montées en série et sont connectées respectivement aux bases de deux transistors NPN 35 et 36. Les collecteurs de ces transistors 35 et 36 sont reliés à une ligne d'alimentation positive 37 respectivement à travers les résistances 38 et 39. Les émetteurs des transistors 35 et 36 sont reliés entre eux à travers deux résistances 40 et 41 montées en pont dont le point milieu est relié au collecteur d'un transistor NPN 42. L'émetteur de ce transistor 42 est relié à la ligne d'alimentation négative 43 à travers une résistance 44 et sa base est connectée au point milieu d'un pont constitué par deux résistances 45 et 46 montées en série entre les lignes d'alimentation positive 37 et négative 43. Le point milieu du pont constitué par les résistances 34 est connecté au point milieu de deux résistances 47 et 48 montées en série entre les lignes d'alimentation. Ce circuit d'émission comporte également deux transistors PNP49 et 50 dont les bases sont connectées respectivement au collecteur des transistors 35 et 36 et dont les collecteurs sont reliés ensemble à la ligne d'alimentation négative 43 à travers une résistance 51. L'émetteur du transistor 49 est relié au collecteur du transistor 36 tandis que l'émetteur du transistor 50 est relié au collecteur du transistor 35. Les collecteurs des transistors 49 et 50 sont également reliés ensemble à l'entrée d'une bascule à seuil 52 dont la sortie constitue la sortie S du circuit de réception. Ce circuit de réception, présente une forte impédance d'entrée afin de permettre le raccordement des terminaux sur la ligne sans perturbation de cette dernière et grâce au montage différentiel des transistors 35 et 36, le circuit n'est sensible qu'à la tension différentielle aux bornes d'entrée E1 et E2. Le transistor 42 et les résistances 44 à 46 constituent une source de courant permettant d'accroître la plage de tension de mode commun admissible. La ligne est polarisée par rapport aux lignes d'alimentation positive 37 et négative 43 par l'intermédiaire des résistances 34, 47 et 48. Les résistances 38 à 41 permettent d'établir le gain différentiel du circuit. Lorsque la tension à l'entrée E1 est positive par rapport à la tension à l'entrée E2, le transistor 49 conduit tandis que le transistor 50 est bloqué. Le transistor 50 conduit lorsque la tension en E2 est positive par rapport à la tension en E1 et le transistor 49 est alors bloqué. Ainsi la tension recueillie aux bornes de la résistance 51 est fonction de la tension différentielle de lignes $V_{E1E2}$ comme représenté à la Fig.6. La bascule à seuil 52 permet de diminuer la sensibilité au bruit différentiel du circuit. L'état logique 1 est obtenu à la sortie S de cette bascule lorsque la ligne est alimentée et quelle que soit la polarité de la borne E1 par rapport à la borne E2.

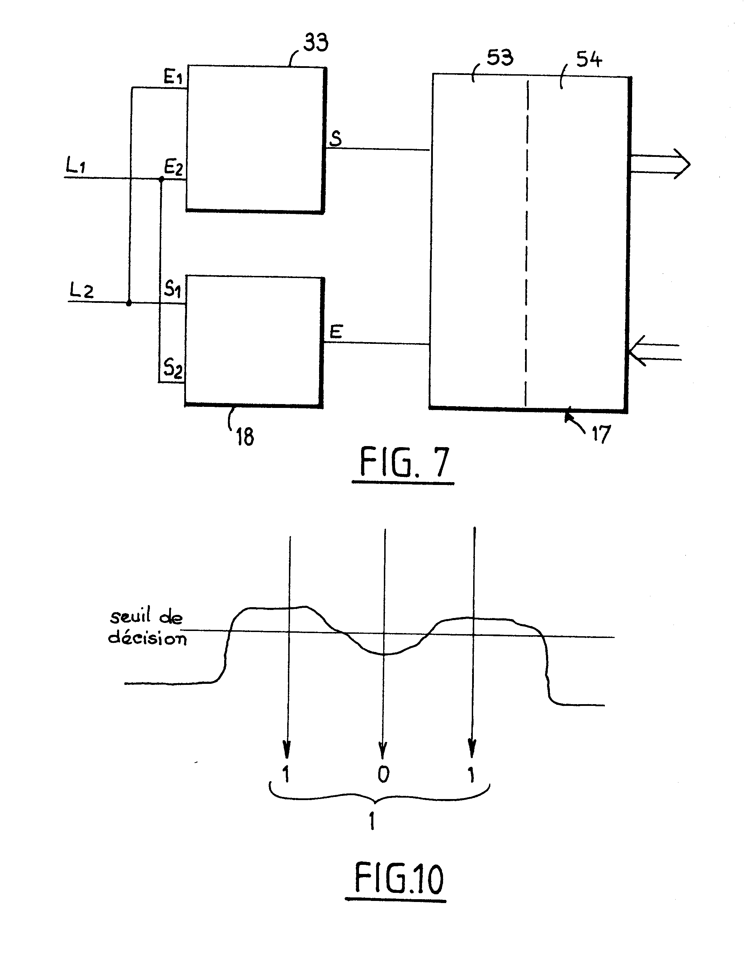

Sur la Fig.7, on a représenté la structure d'un terminal périphérique 4 comportant le circuit d'émission 18 de la Fig.3 et le circuit de réception 33 de la Fig.5. L'entrée E du circuit 18 et la sortie S du circuit 33 sont reliées à un circuit de gestion 17, telles que décrites à la Fig.2 et comportant un circuit de gestion de procédure de dialogue 53 et un circuit de gestion spécifique 54. Les bornes d'entrée E1 et E2 du circuit de réception 33 sont reliées à la ligne de transmission bifilaire respectivement en L1 et L2 à laquelle sont également reliées les sorties S1 et S2 du circuit d'émission 18. Le circuit de gestion 17 est relié au convecteur auquel il est associé pour recevoir et émettre respectivement des informations de commande et des informations d'état et pour assurer sa régulation de température.

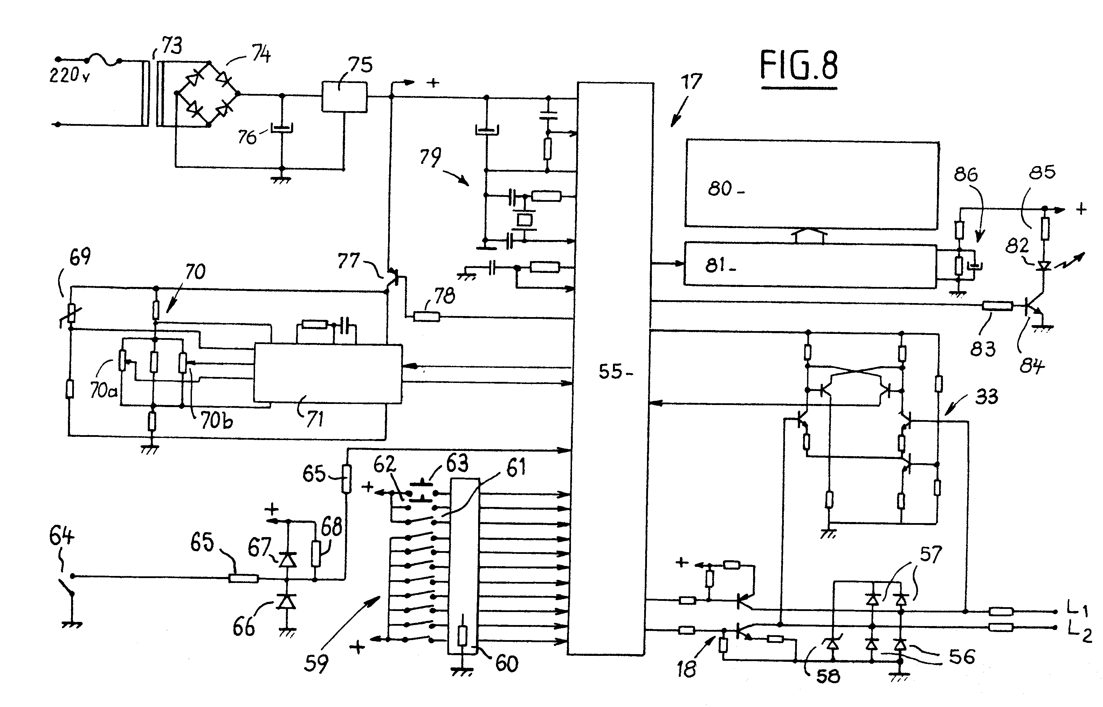

Sur la Fig.8, on a représenté en détail les composants des circuits de gestion 17, d'émission 18 et de réception 33 situés au niveau de chaque terminal périphérique associé à un convecteur (non représenté).

Le circuit de gestion 17 comprend un microprocesseur 55 à des sorties d'émission de données d'état duquel est connecté le circuit d'émission 18 dont les sorties sont connectées aux fils $L_1$ et $L_2$ de

la ligne bifilaire. Ces fils $L_1$ et $L_2$ sont également connectés aux entrées du circuit de réception 33 dont les sorties sont connectées à des entrées de réception de données de commande du microprocesseur 55. Les fils $L_1$ et $L_2$ de la ligne bifilaire non polarisée sont connectés ensemble, d'une part par deux diodes 56 en série dont les anodes communes sont connectées à la borne de masse, et d'autre part par deux diodes 57 en série dont les cathodes communes sont connectées à la cathode d'une diode Zener 58 dont l'anode est reliée à la borne de masse, ceci afin de protéger les circuits contre les dépassements éventuels de tension maximum admissible.

Une série de huit contacts 59 sont reliés ensemble par une de leur bornes à une borne positive d'alimentation. Ces contacts 59 sont reliés par leur autre borne respectivement à huit entrées d'adressage du microprocesseur 55 et à la borne de masse à travers huit résistances représentées schématiquement en 60. Ces huit contacts 59 sont destinés à établir l'adresse du terminal périphérique.

Un contact 61 et deux interrupteurs 62 et 63 sont reliés de manière identique à la borne positive d'alimentation, à trois entrées du microprocesseur 55 et à la borne de masse à travers trois résistances 60.

Le contact 61 est destiné à rendre le terminal périphérique maître ou esclave en inhibant notamment les sorties d'émission de données d'état.

De manière similaire, on peut donc à l'aide du même microprocesseur masque le configurer par ses entrées grâce à un commutateur ou à un mode de câblage de celles-ci, de façon à modifier ses algorithmes internes pour l'adapter à la gestion spécifique d'un convecteur, d'une ventilation, d'un chauffe-eau ....

Le bouton poussoir 62 est destiné à la sélection de l'affichage soit d'une température mesurée soit d'une consigne de température. L'interrupteur 63 est destiné à la demande de passage en mode local dérogé dont le principe sera expliqué plus en détail ci-après.

Un contact 64 de détection de l'état ouvert d'une fenêtre près de laquelle est éventuellement placé le convecteur associé, est connectée à la borne de masse d'une part et à une entrée de données d'état du microprocesseur à travers deux résistances 65 en série d'autre part. Le point milieu de ces résistances est connecté d'une part à la cathode d'une diode 66 dont l'anode est reliée à la borne de masse et d'autre part à anode d'une diode 67 montée en parallèle avec une résistance et dont la cathode est reliée à la borne positive d'alimentation.

Une thermistance CTN 69 constituant le capteur de température du terminal, est connecté par l'intermédiaire d'un ensemble 70 de résistances et de potentiomètres 70a, 70b à un convertisseur analogique-numérique 71 relié au microprocesseur 55. Dans cet ensemble 70, les potentiomètres 70a et 70b sont destinés à l'établissement de la consigne de température locale et à l'étalonnage du capteur de température.

Le dispositif d'alimentation 72 du terminal périphérique est constitué par un transformateur 73 dont le primaire est relié au secteur et dont le secondaire est relié à un pont de diode 74. Le pont 74 est relié à un régulateur de tension 75 dont les entrées sont reliées ensemble par un condensateur 76 et dont la sortie constitue la borne positive d'alimentation. Cette borne positive est reliée à l'émetteur d'un transistor PNP 77 dont le collecteur est connecté à la thermistance 69 et au convertisseur 71. La base du transistor 77 est connecté à travers une résistance 78 au microprocesseur 55.

La borne positive d'alimentation est également reliée au microprocesseur à travers un circuit approprié 79 destiné notamment à la réinitialisation et la synchronisation du microprocesseur et à une fonction de temporisation comme cela sera expliqué par la suite.

Une sortie de transmission de données relative à la température mesurée et à la consigne de température est reliée à un dispositif d'affichage 80 par l'intermédiaire d'un circuit pilote d'affichage 81.

La commande du rapport de cycle de fonctionnement du convecteur est effectuée en tout ou rien par une diode émettrice 82 reliée à une sortie de commande de rapport de cycle du microprocesseur par l'intermédiaire d'une résistance 83 et d'un transistor NPN 84, et à la borne positive d'alimentation à travers une résistance 85. Le circuit pilote d'affichage 81 est également relié à la borne positive d'alimentation par un circuit RC 86 approprié. La diode émettrice 82 est destinée à agir sur un capteur optique non représenté réglant le rapport de cycle du convecteur alimenté en énergie de manière autonome.

On va maintenant décrire le détail d'une action élémentaire de dialogue entre le dispositif de commande central, le terminal périphérique maître d'adresse 'n' et les terminaux périphérique esclaves d'adresse 'n'.

Cet exemple étant traité dans le cas du chauffage électrique par convecteur, chaque convecteur comporte un système de régulation de température à action proportionnelle réalisé numériquement avec une consigne de température sur quatre éléments binaires et une consigne de limitation de rapport de cycle de fonctionnement sur trois éléments binaires. L'action proportionnelle s'effectue en dosant le rapport de cycle de fonctionnement de l'élément chauffant de 0 à 100 %. Chaque convecteur associé à un terminal périphérique maître possède d'autre part un système de détection de fenêtre ouverte qui permet de stopper l'action de chauffage, un dispositif de commande de changement de mode de fonctionnement et une sonde de température incorporée pour le système de régulation. Un des buts est de faire fonctionner les terminaux esclaves en synchronisme avec le terminal maître.

Le bloc de données de commande émis par le dispositif de commande central comporte les mots suivants :
- un mot d'adresse de destination de huit éléments binaires
- un mot d'instructions de commande composé de :
- quatre éléments binaires pour la consigne de température,
- trois éléments binaires pour la consigne de limitation de rapport de cycle de fonctionnement.
- un élément binaire pour le mode de fonctionnement du terminal.

Le bloc de données d'état émis par un terminal périphérique comporte les mots suivants :
- un mot d'adresse de provenance de huit éléments binaires.
- un mot d'informations d'état de huit éléments binaires pour la température mesurée par la sonde.
- un mot d'informations d'état composé de :
- trois éléments binaires pour le rapport de cycle de fonctionnement transmis au convecteur,
- un élément binaire pour l'indication de fenêtre ouverte.
- un élément binaire pour la demande de passage en mode local dérogé.

Les blocs de données de commande ont un format plus réduit que celui des blocs de données d'état ce qui permet une reconnaissance de la direction de la transmission d'un bloc quelconque.

En régime permanent, le fonctionnement est le suivant :

Le dispositif de commande central envoie un bloc de données de commande dont le mot d'adresse de destination est 'n' vers les terminaux périphériques. Le terminal maître et les terminaux esclaves d'adresse 'n' prennent en compte le bloc grâce à la reconnaissance du mot d'adresse selon une des variantes décrites précédemment.

Au niveau du terminal maître, l'ancienne consigne de température est remplacée par les quatre éléments binaires de consigne de température du bloc de données de commande, l'ancienne consigne de limitation de rapport de cycle est remplacée par les trois éléments binaires correspondants du bloc de données de commande et l'élément binaire de mode du bloc de données de commande peut modifier le mode de fonctionnement du terminal.

Au niveau des terminaux esclaves la consigne de température n'est pas utilisée tandis que les éléments binaires de consigne de limitation de rapport de cycle de fonctionnement et de mode de fonctionnement sont traités de la même manière que dans le terminal maître.

Le terminal maître envoie alors un bloc de données d'état dont le mot d'adresse de provenance est 'n'. Le dispositif de commande central et les terminaux esclaves d'adresse 'n' prennent en compte ce bloc consécutif au bloc de données de commande précédent tout en contrôlant l'adresse de provenance.

Au niveau de le dispositif de commande central, les mots d'informations d'état sont analysés, ce qui permet en fonction de la gestion du système de chauffage choisie (niveau de gestion spécifique du dispositif de commande central) de déterminer le bloc qui sera envoyé vers le terminal 'n' lors de l'action élémentaire suivante. Par exemple, si l'élément binaire de demande de passage en mode local dérogé est positionné dans le bloc de données d'état reçu, l'élément binaire de mode de fonctionnement commandera le passage du terminal périphérique en mode local dérogé lors de l'action élémentaire suivante si le dispositif de commande central valide la demande.

Au niveau des terminaux esclaves les trois éléments binaires de rapport de cycle de fonctionnement sont utilisés pour commander directement l'action de chauffage, ce qui permet de faire fonctionner tous les terminaux esclaves de même adresse que le terminal maître à un rythme identique. L'élément binaire d'indication de fenêtre ouverte est utilisé pour stopper l'action de chauffage.

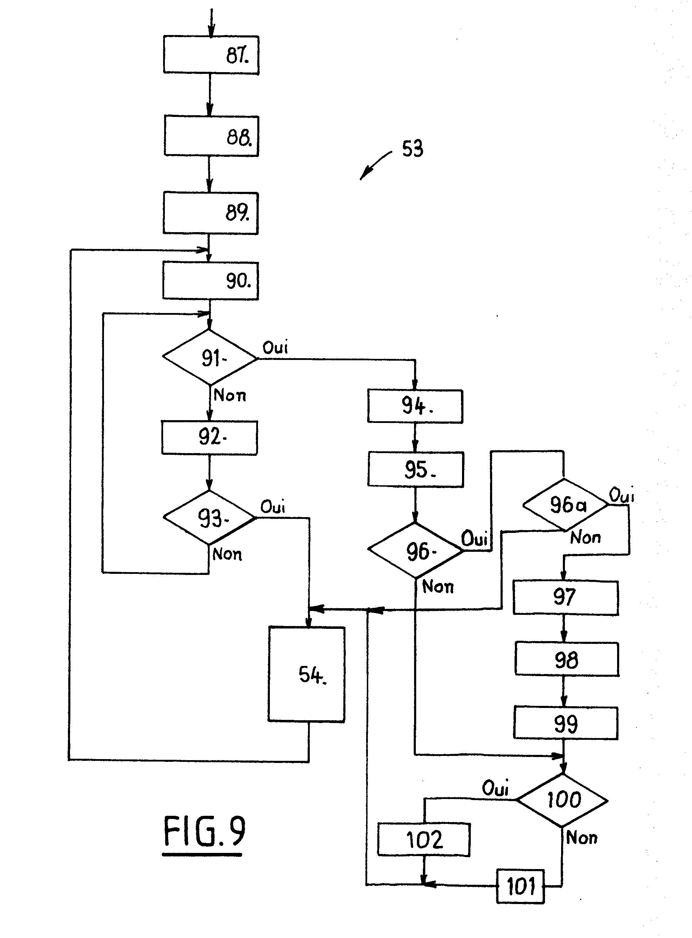

La Fig.9 représente un exemple d'organigramme de fonctionnement ou de gestion du dialogue 53 avec le dispositif de commande central, d'un terminal périphérique programme de manière appropriée. Le bloc 87 correspond à la phase d'initialisation à la mise sous tension du terminal. Le terminal se place alors automatiquement en mode local en 88 dans lequel les données prises en compte sont notamment constituées par la consigne locale de température et la température mesurée. Le terminal passe alors à la phase de lecture 89 de la ligne bifilaire non polarisée $L_1$, $L_2$ et le temporisateur réalisé par le microprocesseur et le circuit 79 est initialisé en 90. A l'étape 91, si aucun bloc de données n'est reçu, le temporisateur est décrémenté en 92. A l'étape 93 on teste le temporisateur et s'il n'est pas à zéro on retourne à l'étape 91 pour la détection d'un bloc de données en provenance de la ligne bifilaire. Si le temporisateur est à zéro en 93, ce qui peut résulter d'une défection de la ligne de transmission ou du dispositif central, on effectue la phase de gestion spécifique du terminal en 54, dont les détails seront fournis par la suite. Dans le cas présent, les données prises en compte pour la gestion spécifique seront des données locales de température et de consigne de température.

Si à l'étape 91 le début d'un bloc de données est detecte on passe à l'étape 94 d'acquisition. Du premier bloc de données puis à l'étape 95 d'acquisition du deuxième bloc de données, étant entendu que la variante d'action élémentaire choisie est l'émission de deux blocs de données selon la troisième variante décrite précédemment. A chaque phase d'acquisition de bloc de données est effectué un échantillonnage des éléments binaires composant les mots du bloc pour leur prise en compte. Dans le cas où cet échantillonnage se traduit par un nombre d'échantillonnage de même état jugé suffisant, l'élément binaire ainsi échantillonné est retenu, dans le cas contraire il n'est pas pris en compte. Ainsi on peut avoir un seuil de validation variable en faisant varier le nombre d'écantillons effectués et le nombre d'échantillons de même état jugé suffisant pour prendre en compte l'information. Par exemple, une décision majoritaire peut être prise pour interpréter l'élément binaire dans le cas d'un nombre impair d'échantillon comme représenté sur la Fig.10, où l'élément binaire 1 sera pris en compte.

Lorsque les phases d'acquisition sont terminées on effectue en 96 une comparaison des adresses contenues dans les deux blocs successifs. Si ces adresses sont identiques on effectue en 96a un contrôle de l'adresse et du format du premier bloc de données (les blocs de données de commande étant d'un format différent de celui des blocs de données d'état). Si l'une des réponses est négative (adresse d'un autre terminal ou format d'un bloc de données d'état) on passe directement à la phase de gestion spécifique 54. Le terminal effectue la réponse au dispositif de commande central en émettant successivement deux blocs de données d'état en 97 et 98. L'étape 99 comprend la comparaison des mots contenus dans les deux blocs de données acquis et en 100, si le taux d'erreurs dans un mot est jugé acceptable le terminal est placé, en 101 en mode central de fonctionnement. Les données prises en compte sont alors les données de commande (éléments binaires ou mots considérés comme bons après comparaison et échantillonnage, correspondant à la consigne centrale de température, à la consigne de limitation de rapport de cycle et au mode de fonctionnement du terminal) contenues dans les blocs reçus avant de passer à la phase de gestion spécifique 54 du terminal. Si le taux d'erreurs est jugé élevé en 100 ce qui correspond à une défection de la ligne de transmission ou du dispositif central le terminal est maintenu en mode local de fonctionnement en 102 pour effectuer la phase de gestion spécifique 54.

Si les adresses comparées en 96 sont diffé rentes, on passe directement à l'étape 100.

La phase 54 de gestion spécifique du terminal comprend les opérations suivantes:
- mesure de la tension d'alimentation et conversion en numérique de cette mesure,
- conversion en numérique de la consigne de température prise en compte,
- conversion en numérique de la température ambiante mesurée,
- mise à jour du dispositif d'affichage en tenant compte de l'état de l'interrupteur 62,
- prise en compte de l'interrupteur 63 de demande de passage en mode local dérogé et de l'élément binaire d'autorisation,
- prise en compte du contact 61 pour rendre le terminal maître ou esclave en supprimant les phases 97 et 98 de l'organigramme, et calcul de l'action proportionnelle intégrale à effectuer et mémoriser ou réac-tualiser pour régler le rapport de cyclique du convecteur suivant le formule :

$$S_j = S_{j-1} + \frac{1}{8_p} \left( \Delta T_j - \Delta T_{j-1} + \frac{T_E}{T_I} \Delta T_{j-1} \right)$$

dans laquelle
$S_j$ est la sortie de commande du rapport cyclique à calculer
$S_{j-1}$ est cette même sortie au calcul précédant
$B_p$ est la bande proportionnelle en °C (environ 2°C)
$T_E$ est la période d'échantillonnage (environ 30 secondes)
$T_I$ est la constante de temps d'intégration (environ 5mn)
$\Delta T_j$ et $\Delta T_{j-1}$ sont les différences entre les consignes de température et les températures mesurées respectivement à l'instant du calcul et au calcul précédent (on effectue par exemple six mesures de température au cours de la période d'intégration et on prend en compte leur moyenne).

Afin de diminuer la durée de la phase de gestion spécifique et donc d'augmenter l'échange avec le dispositif de commande central, ces opérations prennent place dans des boucles parallèles associées à des indices croissants et seront effectuées successivement par incrémentation chacune au cours d'une phase de gestion spécifique distincte. Le passage en mode local dérogé est subordonné à l'autorisation (un élément binaire du bloc de données de commande) par le dispositif de commande central qui peut ordonner le retour en mode central. Le fonctionnement en mode local dérogé est sensiblement le même que celui en mode local.

Dans le cas d'une application au chauffage électrique direct par convecteur, la puissance électrique d'alimentation de chaque terminal est rendue indépendante du canal de transmission si bien qu'une défaillance quelconque de celui-ci n'entraîne qu'un changement de mode du terminal sans arrêt du fonctionnement de celui-ci. Chaque terminal est donc autonome et peut assurer seul le fonctionnement pour lequel il a été conçu grâce à son circuit de gestion spécifique 54.

Avec un tel système de commande, il est possible simultanément de régler la consigne de limite maximale du rapport cyclique de chaque convecteur en fonction des températures ambiantes mesurées, d'obte nir au niveau du dispositif central des informations sur les températures ambiantes, l'ouverture ou la fermeture d'une fenêtre, les consignes de température et de limite de rapport cyclique de chaque convecteur à chaque instant et sur l'évolution de ces paramètres. Il est ainsi possible d'établir un ordre de priorité pour, lors d'une gestion de la puissance totale maximale tolérée, effectuer un délestage (arrêt d'une partie des appareillages commandés) optimal. Cette gestion est notamment importante dans le cadre de l'application des tarifs multiples pour la consommation d'énergie en fonction de périodes tarifaires ou de puissances souscrites ou autres.

**Revendications**

1. Système de commande sélective d'une série de terminaux périphériques (4, 4', 4", 4''') à chacun desquels est associé à un appareillage local unique à commander, notamment des dispositifs de chauffage, de ventilation, d'éclairage ou analogue, ledit terminal étant incorporé audit appareillage par un dispositif de commande central (2) comportant des moyens d'émission (18) de blocs de données de commande sélective desdits terminaux périphériques, chaque terminal périphérique étant réalisé à base d'un unique contrôleur masque identique pour tous les appareils mais configurable par ses entrées et/ou son mode de câblage et comportant des moyens de réception (33) desdits blocs de données de commande, caractérisé en ce que chaque terminal périphérique comprend en outre des moyens de détection d'état (63, 64, 69) de l'appareillage et/ou de son environnement, des moyens de traitement de données d'état et de commande (55), des moyens d'émission (18) de blocs de données d'état en réponse à la réception d'un bloc de données de commande et des moyens d'asservissement et de commande (82 à 85) de l'appareillage associé en fonction du bloc de données de commande reçu, le fonctionnement de l'appareillage pouvant être assuré de manière autonome par le terminal périphérique, et en ce que le dispositif de commande central comporte des moyens de réception (33) des blocs de données d'état émis par les terminaux périphériques, le tout étant caractérisé par une architecture de transmission sur un seul niveau.

2. Système de commande sélective selon la revendication 1, caractérisé en ce que chaque terminal périphérique comprend des moyens (63) de demande de passage en mode local dérogé dans lequel une partie des données de commande utilisées par les moyens de traitement de données (55) est définie localement (69, 70, 71) par le terminal périphérique considéré.

3. Système de commande sélective selon l'une quelconque des revendications 1 et 2, caractérisé en ce que chaque terminal comprend des moyens de détection de blocs de données circulant sur la ligne de transmission et des moyens d'identification du contenu des blocs de données reçus, et des moyens pour passer automatiquement en mode local dans lequel une partie des données de commande utilisées par les moyens de traitement de données (55) est définie localement (69, 70, 71) par le terminal périphérique, en l'absence de réception de blocs de données identifiables pendant une durée prédéterminée.

4. Système de commande sélective selon l'une quelconque des revendications précédentes, caractérisé en ce que les blocs de données d'état ont un format différent de celui des blocs de données de commande et en ce que chaque terminal comporte des moyens de comparaison du format des blocs de données reçus.

5. Système de commande sélective selon l'une quelconque des revendications précédentes, caractérisé en ce que la liaison entre le dispositif central et les terminaux est une ligne bifilaire non polarisée (L1, L2).

6. Système de commande sélective selon la revendication 5, caractérisé en ce que chaque bloc de données d'état et de commande est constitué d'une série d'éléments binaires.

7. Système se commande sélective selon l'une quelconque des revendications 5 et 6, caractérisé en ce que le circuit d'émission (18) de de chaque terminal périphérique comport deux sources de courant (21, 26) symétriques de signes opposés, commandées en synchronisme.

8. Système de commande sélective selon l'une quelconque des revendications 5 à 7, caractérisé en ce que les moyens de réception (33) de chaque terminal périphérique comportent un étage différentiel (35, 36) associé à des moyens redresseurs (49, 50) à sortie unipolaire référencée à la ligne d'alimentation (43) du circuit (33).

9. Système de commande sélective selon l'une quelconque des revendications précédentes, caractérisé en ce que le dispositif central et les terminaux périphériques émettent deux ou plus de deux blocs de données successifs à chaque émission.

10. Système de commande sélective selon la revendication 9, caractérisé en ce que chaque terminal périphérique comporte des moyens de comparaison des adresses et des données de commande contenues dans des blocs de données successifs, et des moyens de passage automatique en mode local de fonctionnement lorsque le taux d'erreurs dépasse une valeur prédéterminée.

11. Système de commande sélective selon l'une quelconque des revendications précédentes, caractérisé en ce qu'il comprend un ou plusieurs autres terminaux périphériques (4a, 4b et 4"a, 4"b) associés chacun à un des terminaux périphériques (4 et 4"), repérés par la même adresse que ce terminal et dont les moyens d'émission de blocs de données d'état sont bloqués.

12. Système de commande sélective selon l'une quelconque des revendications précédentes, caractérisé en ce que le dispositif de commande central comporte un circuit de codage et de modulation (5) relié par la ligne de transmission à un circuit de démodulation et de décodage (11) relié aux moyens de réception de chaque terminal, et un circuit de décodage et de démodulation (8) relié par la ligne de transmission à un circuit de codage et de modulation (14) relié aux moyens d'émission de chaque terminal périphérique.

0223663

FIG.1

FIG. 2

FIG. 3

FIG.4

FIG. 5

FIG.6

0223663

FIG. 7

FIG.10

FIG.8

0223663

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | WO-A-8 400 624 (JOHNSON SERVICE COMPANY) <br> * Résumé; page 13, lignes 18-25; page 18, ligne 33 - page 20, ligne 29; page 21, ligne 29 - page 22, ligne 2; page 45, ligne 9 - page 46, ligne 9; page 46, ligne 29 - page 47, ligne 8; figures 1-3 * | 1,2 | G 05 D 23/19 <br> H 02 J 13/00 |
| A | | 3,6,10 ,12 | |
| | --- | | |
| Y | GB-A-2 039 402 (ROBERTSHAW CONTROL CO.) <br> * Résumé; figure 1 * | 1 | |
| A | | 9 | DOMAINES TECHNIQUES RECHERCHES (Int. Cl.4) |
| | --- | | G 05 D <br> H 02 J |
| Y | FR-A-2 521 320 (R.GARET) <br> * Page 1, lignes 1-9; page 2, lignes 4-23; page 4, lignes 3-12; page 14, lignes 20-29 * | 2 | |
| | --- | | |
| A | US-A-4 115 860 (J.BRADFORD) <br> * Résumé * | 3 | |
| | --- | | |
| A | US-A-4 332 013 (D.CHELCUN) <br> * Résumé; colonne 3, ligne 24 - colonne 6, ligne 15; figure 1 * | 1,4-6 | |
| | ---              -/- | | |

Le présent rapport de recherche a été établi pour toutes les revendications

| Lieu de la recherche | Date d'achèvement de la recherche | Examinateur |
|---|---|---|
| LA HAYE | 21-01-1987 | HELOT H.V. |

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 143 993 (RAKENNUS VALMISTE OY) * Résumé; page 4, lignes 19-25; page 6, lignes 28-32; figure 1 * | 1 | |
| A | EP-A-0 040 689 (MICROTEL ELECTRONIC GmbH) * Résumé; figure 1 * | 1 | |

DOMAINES TECHNIQUES
RECHERCHES (Int. Cl.4)

Le présent rapport de recherche a été établi pour toutes les revendications

| Lieu de la recherche | Date d'achevement de la recherche | Examinateur |
|---|---|---|
| LA HAYE | 21-01-1987 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié a la date de dépôt ou après cette date
D : cité dans la demande
L : cité pour d'autres raisons

& : membre de la même famille, document correspondant

OEB Form 1503 03 82